# EUROPÄISCHE PATENTSCHRIFT

(11) **EP 2 251 656 B1**
(45) Veröffentlichungstag und Bekanntmachung des Hinweises auf die Patenterteilung: **21.03.2018**
(21) Anmeldenummer: 10004619.2
(22) Anmeldetag: 03.05.2010
(51) Int. Cl.: G01F 23/72, G01F 25/00

(54) **Verfahren zum Diagnostizieren der Funktionsfähigkeit eines Füllstandsgebers**
Method for diagnosing the functionality of a fill level indicator
Procédé destiné à diagnostiquer la capacité fonctionnelle d'un indicateur de degré de remplissage

(30) Priorität: 15.05.2009 DE 102009021454
(43) Veröffentlichungstag der Anmeldung: 17.11.2010
(73) Patentinhaber: Audi AG, 85045 Ingolstadt (DE)
(72) Erfinder: Stenzel, Michael, 85049 Ingolstadt (DE); Schwermer, Wolf Benjamin, 38524 Sassenburg (DE)
(74) Vertreter: Krah, Annette

(56) Entgegenhaltungen:
- EP-A1- 1 314 968
- WO-A1-01/56837
- DE-A1- 3 540 806
- DE-A1- 19 548 684
- DE-A1- 19 926 648

## Beschreibung

Die Erfindung betrifft ein Verfahren zum Diagnostizieren der Funktionsfähigkeit eines Füllstandsgebers einer Füllstandsanzeige für einen Vorratsbehälter eines flüssigen Betriebsmittels in einem Kraftfahrzeug, gemäß dem Oberbegriff des Patentanspruches 1.
Ein Verfahren der gattungsgemäßen Art beschreibt die DE 199 26 648 A1, demgemäß die Signaldynamik des unbedämpften Rohsignales des Füllstandsgebers im Fahrbetrieb des Kraftfahrzeuges auf durch Schwappbewegungen der Flüssigkeit bedingte Änderungen überwacht wird. Treten keine Änderungen des Rohsignales innerhalb definierter Grenzwerte auf, so wird auf einen defekten Füllstandsgeber geschlossen und ein Warnsignal generiert.

Das Dokument DE 195 48 684 A1 offenbart ein Verfahren zum Erfassen von abgasrelevanten Fehlfunktionen eines Fahrzeugs, bei welchem eine Füllstandsbestimmung des Kraftstofftanks vorgenommen wird. Eine Fehlfunktion wird zu dem Füllstandswert des Kraftstofftanks in Bezug gesetzt und eine Ausgabe der Fehlermeldung in Abhängigkeit von dem Füllstandswert des Kraftstofftanks vorgenommen. Die Fehlermeldung wird nur dann kontinuierlich ausgegeben, wenn sie auf einem technischen Defekt, nicht aber auf einem leergefahrenen Tank beruht. Aufgabe der Erfindung ist es, ein Verfahren der gattungsgemäßen Art vorzuschlagen, mit dem eine verbesserte und zuverlässigere Diagnose der Funktionsfähigkeit der Füllstandsanzeige erzielbar ist.
Diese Aufgabe wird erfindungsgemäß mit den Merkmalen des Patentanspruches 1 gelöst. Vorteilhafte Weiterbildungen des Verfahrens sind den weiteren Patentansprüchen entnehmbar.
Gemäß dem kennzeichnenden Teil des Anspruches 1 wird in dem Diagnoseverfahren zumindest eine zusätzliche Diagnosebedingung erfasst. Das Warnsignal wird dann unter Berücksichtigung dieser zusätzlich erfassten Diagnosebedingung ausgegeben oder unterdrückt. Im erfindungsgemäßen Diagnoseverfahren wird somit zunächst ermittelt und erfasst, ob Rohsignal-Änderungen vorliegen, die durch Betriebsmittelschwankungen induziert werden. Falls ja, wird unter Berücksichtigung der zusätzlichen Diagnosebedingung geprüft, ob das Warnsignal angezeigt wird oder nicht. Als eine zusätzliche Diagnosebedingung wird der Füllstand des Betriebsmittels erfasst, und in Abhängigkeit von der Höhe des erfassten Füllstands das Warnsignal angezeigt oder unterdrückt. Erfindungsgemäß kann daher ein Überwachungsschema des Füllstandgeber-Steuergeräts auf die über den gesamten Füllstandsbereich des Betriebsmittels im Vorratsbehälter auftretende Änderungscharakteristik der Rohsignale abgestimmt werden. Es wurde erkannt, dass eine zuverlässige Überwachung nur dann erreichbar ist, wenn die Auswertung der Rohsignale des Füllstandsgebers auf die über den zu messenden Füllstandsbereich spezifisch auftretende Signaldynamik im Fahrbetrieb abgestimmt ist. Die Signaländerungen sind sowohl abhängig von der Vorratsbehältergeometrie, von der Füllstandsgeberkonstruktion, vom Füllstand als solches, etc. unterschiedlich und können zum Beispiel empirisch ermittelt und bei der Signalauswertung entsprechend im Überwachungsschema berücksichtigt werden. Bei einem Füllstand oberhalb und unterhalb eines definierten Füllstandsbereiches im Vorratsbehälter wird bei Nichtauftreten von Änderungen des Rohsignales das Warnsignal unterdrückt bzw. keine Auswertung durchgeführt. Damit kann in besonders wirkungsvoller Weise konstruktiven Gegebenheiten sowohl des Füllstandsgebers als auch geometrischen Eigenheiten (Außenform, unterschiedliche Volumina) des Vorratsbehälters in diesen Bereichen Rechnung getragen werden. Bei einem Füllstand oberhalb des definierten Füllstandsbereiches im Vorratsbehälter wird das Warnsignal über ein definiertes Zeitintervall des Fahrbetriebes des Kraftfahrzeuges ausgeblendet oder unterdrückt. Dies stellt sicher, dass zum Beispiel ein außerhalb des Überwachungsbereiches "hängender" Schwimmer nach Ablauf des Zeitintervalles zuverlässig erkannt und ein Warnsignal generiert wird. Zusätzlich kann ferner bei einem Füllstand oberhalb des definierten Füllstandsbereiches im Vorratsbehälter das Warnsignal über eine definierte Fahrstrecke des Kraftfahrzeuges unterdrückt werden.
In vorteilhafter Weiterbildung des erfindungsgemäßen Verfahrens kann bei einem Füllstand unterhalb des definierten Füllstandsbereiches im Vorratsbehälter das Warnsignal dann unterdrückt werden, wenn eine einen Nachfüllbedarf des Vorratsbehälters anzeigende Warneinrichtung aktiviert ist. Damit ist im unteren, ausgeblendeten Überwachungsbereich eine Redundanz geschaffen, die bei einem Nachfüllen des Vorratsbehälters ohne Rohsignaländerung einen zum Beispiel "hängenden" Schwimmer oder einen anderweitig defekten Füllstandsgeber erkennt und das Warnsignal auslöst. Zusätzlich zur Verwendung des Füllstands als Diagnosebedingung kann eine Änderung der Geschwindigkeit, der Beschleunigung oder des Lenkwinkels verwendet werden. In diesem Fall werden also bei der Fehlerbeurteilung fahrdynamisch definierte Zustände zugrunde gelegt. Das Warnsignal oder Fehlersignal wird dabei erzeugt, wenn einerseits keine durch Betriebsmittelschwankungen indizierten Änderungen des Füllstands erfasst werden und andererseits die oben erwähnte Diagnosebedingung erfüllt ist.

Bei der Überwachung eines bei Minus-Temperaturen gefrierenden Betriebsmittels (zum Beispiel Waschwasser, Harnstoff-Wasserlösung bei der Abgasreinigung von Diesel-Abgasen, etc.) kann dessen Temperatur mittelbar oder unmittelbar erfasst werden, wobei bei einer definierten Minustemperatur das Warnsignal unabhängig vom Füllstand im Vorratsbehälter unterdrückt wird. Damit könnte gegebenenfalls vermieden werden, dass das Diagnosesystem auf eine nicht funktionsfähige Füllstandsanzeige schließt und das entsprechende Warnsignal generiert, obwohl das Medium gefroren ist und sich nicht bewegen kann.

Der Zustand des eingefrorenen Betriebsmittels könnte jedoch auch über eine separate Warnanzeige angezeigt oder entsprechend als ein Hinweis im Fehlerspeicher eines Motorsteuergerätes abgelegt werden.

Ein Ausführungsbeispiel des erfindungsgemäßen Verfahrens ist im Folgenden anhand der beiliegenden, schematischen Zeichnung näher erläutert. Gezeigt ist beispielhaft ein Flüssigkeitsbehälter für Kraftfahrzeuge mit einer Füllstandsmesseinrichtung und einer Diagnoseeinrichtung mit einem elektronischen Steuergerät.

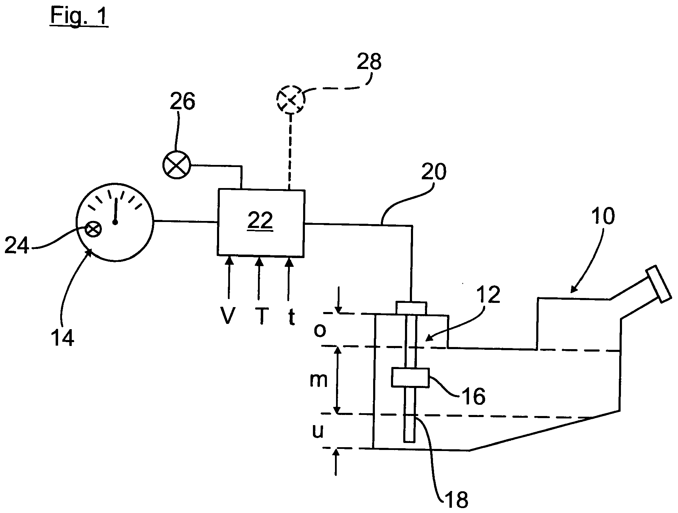

In der Zeichnung ist mit 10 ein Flüssigkeitsbehälter für Kraftfahrzeuge bezeichnet, dessen Füllstand mittels eines in den Behälter 10 eingebauten Füllstandsgebers 12 erfasst und mit einer analogen (oder gegebenenfalls digitalen) Anzeigeeinrichtung 14 angezeigt wird.

Der Füllstandsgeber 12 arbeitet zum Beispiel nach dem Hallprinzip und weist einen Schwimmer 16 auf, der auf einer eine gekapselte elektrische Wicklung aufweisenden, in den Behälter einragenden Spule 18 verschiebbar geführt ist und sich auf das jeweilige Flüssigkeitsniveau einstellt.

Der Füllstandsgeber 12 gibt entsprechend dem Füllstand ein Rohsignal ab, das über eine elektrische Leitung 20 einem elektronischen Steuergerät 22 zugeführt wird.

In dem elektronischen Steuergerät 22 wird das Füllstands-Rohsignal in einem Filter in an sich bekannter Weise bedämpft und der analogen Anzeigeeinrichtung 14 zugeführt. Von dieser kann im Fahrbetrieb des Kraftfahrzeuges der Füllstand zwischen "Leer" und "Voll" abgelesen werden.

In der Anzeigeeinrichtung 14 (oder gegebenenfalls auch außerhalb) ist eine optische Warnanzeige 24 angeordnet, die dann angesteuert wird, wenn der Füllstand im Behälter 10 unterhalb eines mittleren Bereiches m liegt bzw. einen unteren Bereich u erreicht.

Neben der regulären Auswertung der Füllstände mittels des Füllstandsgebers 12 werden im Steuergerät 22 im Fahrbetrieb zunächst die durch Fahrzeugbewegungen verursachten Änderungen des Rohsignales des Füllstandsgebers 12 diagnostiziert bzw. auf fahrbedingte Änderungen oder obere und untere Grenzwerte überwacht.

Das Steuergerät 22 erfasst außerdem die Temperatur T der Flüssigkeit im Behälter 10. Sowohl die Flüssigkeitstemperatur T als auch die erfasste Füllstandshöhe der Flüssigkeit werden im Rahmen des erfindungsgemäßen Diagnoseverfahrens als zusätzliche Diagnosebedingungen berücksichtigt. Es wird daher zunächst erfasst, ob Rohsignal-Änderungen vorliegen, die durch Betriebsmittelschwankungen induziert sind. Sofern derartige Rohsignalschwankungen vom Steuergerät 22 erfasst sind, prüft das Steuergerät unter Berücksichtigung der Diagnosebedingungen, ob das Warnsignal erzeugt wird oder nicht.

Das Überwachungsschema wird daher abhängig vom Füllstand des Behälters 10 angepasst. Diese können zunächst empirisch ermittelt bzw. eingegrenzt werden und in der elektronischen Steuerung entsprechend abgelegt sein.

Im Ausführungsbeispiel werden dazu die über den Bereich m vorliegenden Füllstände bzw. deren Änderungen im Fahrbetrieb erfasst und - sofern keine Änderungen auftreten sollten - eine optische Warnanzeige 26 angesteuert, die auf einen defekten Füllstandsgeber hinweist.

Im Bereich o oberhalb des definierten mittleren Bereiches m wird über das Steuergerät 22 eine Diagnose der Rohsignal-Änderungen des Füllstandsgebers 12 erst aktiviert, wenn ein definiertes Zeitintervall t im Fahrbetrieb des Kraftfahrzeuges abgelaufen ist, wobei Stillstandsphasen ohne Betriebsmittelverbrauch unberücksichtigt bleiben.

Im Bereich u unterhalb des mittleren Bereiches m des Füllstandes im Behälter 10 wird ebenfalls die Auswertung der Änderungssignale bzw. eine Diagnose der Funktionsfähigkeit des Füllstandsgebers 12 unterdrückt und somit die Warnanzeige 26 ausgeblendet.

Diese Ausblendung geht einher mit der Aktivierung der Warnanzeige 24, die auf ein anstehendes Nachfüllen von Betriebsmitteln, zum Beispiel Kraftstoff, in den Behälter 10 hinweist.

Wird in den Behälter 10 wieder Betriebsmittel nachgetankt, so erlischt die Warnanzeige 24 und eine Diagnose des Füllstandsgebers 12 setzt wie vorbeschrieben wieder ein.
Soll die Diagnose der Funktionsfähigkeit eines schwimmergesteuerten Füllstandsgebers an einem Vorratsbehälter durchgeführt werden, in dem ein bei Minustemperaturen gegebenenfalls einfrierendes Betriebsmittel bevorratet ist, zum Beispiel eine Harnstoff-Wasserlösung bei einer Diesel-Abgasreinigungsvorrichtung, so kann abweichend zur vorstehenden Ausführung dem Steuergerät 22 ferner ein Temperatursignal T zugeführt werden. Die Höhe der erfassten Temperatur dient als eine weitere Diagnosebedingung, die bei der Prüfung, ob oder ob nicht ein Warnsignal erzeugt wird, berücksichtigt wird. Der Temperatursensor kann dabei innerhalb oder außerhalb des Vorratsbehälters angeordnet sein.
Bei entsprechend auftretenden Minustemperaturen und ausbleibenden Änderungs-Rohsignalen des Füllstandsgebers 12 kann das Steuergerät 22 darauf schließen, dass das Betriebsmittel eingefroren und eine Diagnose nicht möglich ist.
Das Steuergerät 22 steuert bei diesem erkannten Zustand eine weitere Warnanzeige 28 (in gestrichelten Linien angedeutet) an oder legt gegebenenfalls einen entsprechenden Hinweis in einen Fehlerspeicher des elektronischen Motorsteuergerätes (nicht dargestellt) ab.

Anstelle des nach dem bekannten Hallprinzip ausgeführten Füllstandsgebers 12 kann dieser auch als Hebelgeber oder als beliebig gestalteter anderer Geber ausgeführt sein.

Ein weiteres Kriterium im Überwachungsschema kann die Erfassung definierter Fahrzustände durch Auswertung von Geschwindigkeits-, Beschleunigungs- oder von Richtungswechseln, etc. sein. Solche Signale können zum Beispiel bei Kraftfahrzeugen mit ABS oder elektronischen Fahrstabilitätsprogrammen ohne weiteres von den vorhandenen Einrichtungen und Sensoren abgeleitet werden.
So kann zum Beispiel bei einer über das Geschwindigkeitssignal und gegebenenfalls ein Lenkwinkelsignal der Lenkeinrichtung des Kraftfahrzeuges erkannten, gleichmäßigen Fahrt des Kraftfahrzeuges die Diagnose solange ausgeblendet werden, bis Geschwindigkeits- und/oder Richtungsänderungen des Kraftfahrzeuges angezeigt sind.
Anstelle der beschriebenen optischen Warneinrichtung 26, 28 kann zusätzlich oder alternativ auch eine akustische Fehlermeldung generiert werden.

## Patentansprüche

1. Verfahren zum Diagnostizieren der Funktionsfähigkeit eines Füllstandsgebers (12) einer Füllstandsanzeige für einen Vorratsbehälter (10) eines flüssigen Betriebsmittels in einem Kraftfahrzeug, bei dem das elektrische Rohsignal des Füllstandsgebers (12) im Fahrbetrieb auf durch Betriebsmittelschwankungen induzierte Änderungen, also auf durch Fahrzeugbewegungen verursachten Änderungen, überwacht wird und bei Nichtauftreten derartiger Änderungen ein (26) Warnsignal generiert wird, **dadurch gekennzeichnet, dass** in dem Diagnoseverfahren zumindest eine zusätzliche Diagnosebedingung erfasst wird, und das Warnsignal (26) unter Berücksichtigung der erfassten zusätzlichen Diagnosebedingung angezeigt oder unterdrückt wird, wobei als eine zusätzliche Diagnosebedingung der Füllstand des Betriebsmittels erfasst wird und in Abhängigkeit von der Höhe des erfassten Füllstands das Warnsignal (26) angezeigt oder unterdrückt wird, wobei bei einem Füllstand oberhalb und unterhalb eines definierten Füllstandsbereiches (m) im Vorratsbehälter (10) bei Nichtauftreten von Änderungen des Rohsignales das Warnsignal (26) unterdrückt wird, wobei bei einem Füllstand oberhalb des definierten Füllstandsbereiches (m) im Vorratsbehälter (10) das Warnsignal (26) über ein definiertes Zeitintervall (t) des Fahrbetriebes des Kraftfahrzeuges unterdrückt wird.

2. Verfahren nach Anspruch 1, **dadurch gekennzeichnet, dass** bei einem Füllstand oberhalb des definierten Füllstandsbereiches (m) im Vorratsbehälter (10) das Warnsignal (26) über eine definierte Fahrstrecke des Kraftfahrzeuges oder über einen definierten Verbrauch des flüssigen Betriebsmittels unterdrückt wird.

3. Verfahren nach Anspruch 1 oder 2, **dadurch gekennzeichnet, dass** bei einem Füllstand unterhalb des definierten Füllstandsbereiches (m) im Vorratsbehälter (10) das Warnsignal (26) dann unterdrückt wird, wenn eine einen Nachfüllbedarf des Vorratsbehälters (10) anzeigende Warneinrichtung (24) aktiviert ist.

4. Verfahren nach einem der vorhergehenden Ansprüche, **dadurch gekennzeichnet, dass** bei der Überwachung eines bei Minus-Temperaturen gefrierenden Betriebsmittels dessen Temperatur (T) mittelbar oder unmittelbar erfasst wird und dass bei einer definierten Minustemperatur das Warnsignal (26) unabhängig vom Füllstand im Vorratsbehälter (10) unterdrückt wird.

5. Verfahren nach Anspruch 4, **dadurch gekennzeichnet, dass** der Zustand des eingefrorenen Betriebsmittels über eine separate Warnanzeige (28) angezeigt oder als entsprechender Hinweis im Fehlerspeicher eines elektronischen Motorsteuergerätes abgelegt wird.

6. Verfahren nach einem der vorhergehenden Ansprüche, **dadurch gekennzeichnet, dass** als eine weitere zusätzliche Diagnosebedingung die Änderung der Geschwindigkeit, die Änderung der Beschleunigung, oder die Änderung des Lenkwinkels erfasst wird, und in Abhängigkeit von der Höhe der erfassten Änderung das Warnsignal erzeugt wird.

## Claims

1. Method for diagnosing the functionality of a filling level sensor (12) of a filling level indicator for a storage container (10) of a liquid operating medium in a motor vehicle, in which the electric raw signal of the filling level sensor (12) is monitored during travel operation for changes brought about by operating medium fluctuations, that is to say, for changes brought about by vehicle movements, and when such changes do not occur a warning signal (26) is generated, **characterised in that** in the diagnosis method, at least one additional diagnosis condition is detected and the warning signal (26) is indicated or suppressed taking into account the detected additional diagnosis condition, wherein the filling level of the operating medium is detected as an additional diagnosis condition and, depending on the height of the detected filling level, the warning signal (26) is indicated or suppressed, wherein with a filling level above and below a defined filling level range (m) in the storage container (10), when changes of the raw signal do not occur, the warning signal (26) is suppressed, wherein with a filling level above the defined filling level range (m) in the storage container (10) the warning signal (26) is suppressed over a defined time range (t) of the travel operation of the motor vehicle.

2. Method according to claim 1, **characterised in that** in the event of a filling level above the defined filling level range (m) in the storage container (10) the warning signal (26) is suppressed over a defined travel path of the motor vehicle or over a defined consumption of the liquid operating medium.

3. Method according to claim 1 or 2, **characterised in that** with a filling level below the defined filling level range (m) in the storage container (10) the warning signal (26) is suppressed when a warning device (24) which indicates a requirement to fill the storage container (10) is activated.

4. Method according to any one of the preceding claims, **characterised in that**, when an operating medium which freezes at minus temperatures is monitored, the temperature (T) thereof is detected indirectly or directly and **in that** at a defined minus temperature the warning signal (26) is suppressed regardless of the filling level in the storage container (10).

5. Method according to claim 4, **characterised in that** the state of the frozen operating medium is indicated by means of a separate warning indicator (28) or as a corresponding notification in the error store of an electronic engine control unit.

6. Method according to any one of the preceding claims, **characterised in that** the change of the speed, the change of the acceleration or the change of the steering angle is detected as an additional diagnosis condition and the warning signal is produced depending on the level of the detected change.

## Revendications

1. Procédé pour diagnostiquer la capacité à fonctionner d'un capteur de niveau (12) d'un indicateur de niveau pour un réservoir (10) d'un fluide de fonctionnement dans un véhicule automobile, dans lequel le signal brut électrique du capteur de niveau (12) en condition de conduite est surveillé quant à des variations induites par des oscillations de fluide de fonctionnement, donc par des variations provoquées par des mouvements de véhicule, et en l'absence de variations de ce type, un signal d'avertissement (26) est produit, **caractérisé en ce que**, dans le procédé de diagnostic, on détecte au moins une condition de diagnostic supplémentaire et on active ou bloque le signal d'avertissement (26) en tenant compte de la condition de diagnostic supplémentaire détectée,dans lequel on détecte comme condition de diagnostic supplémentaire le niveau du fluide de fonctionnement et on active ou bloque le signal d'avertissement (26) en fonction de la hauteur du niveau détecté, dans lequel, en présence d'un niveau au-dessus ou au-dessous d'une plage de niveau définie (m) dans le réservoir (10), si aucune variation du signal brut n'apparaît, on bloque le signal d'avertissement (26), dans lequel, en présence d'un niveau au-dessus de la plage de niveau définie (m) dans le réservoir (10), on bloque le signal d'avertissement (26) pendant un intervalle de temps défini (t) de la conduite du véhicule automobile.

2. Procédé selon la revendication 1, **caractérisé en ce que**, en présence d'un niveau au-dessus de la plage de niveau définie (m) dans le réservoir (10), on bloque le signal d'avertissement (26) pendant un trajet défini du véhicule automobile ou pendant une consommation définie du fluide de fonctionnement.

3. Procédé selon la revendication 1 ou 2, **caractérisé en ce que**, en présence d'un niveau au-dessous de la plage de niveau définie (m) dans le réservoir (10), on bloque le signal d'avertissement (26) lorsqu'un dispositif d'avertissement (24) indiquant une nécessité de remplissage du réservoir (10) est activé.

4. Procédé selon l'une quelconque des revendications précédentes, **caractérisé en ce que**, lors de la surveillance d'un fluide de fonctionnement gelant à des températures négatives, la température (T) de celui-ci est détectée indirectement ou directement et **en ce que**, en présence d'une température négative définie, le signal d'avertissement (26) est bloqué indépendamment du niveau dans le réservoir (10).

5. Procédé selon la revendication 4, **caractérisé en ce que** l'état du fluide de fonctionnement gelé est indiqué par l'intermédiaire d'un indicateur d'avertissement (28) séparé ou est enregistré sous forme d'information correspondante dans la mémoire d'erreur d'un appareil électronique de commande de moteur.

6. Procédé selon l'une quelconque des revendications précédentes, **caractérisé en ce que**, comme autre condition de diagnostic supplémentaire, on détecte la variation de la vitesse, la variation de l'accélération ou la variation de l'angle de braquage et on produit le signal d'avertissement en fonction de la hauteur de la variation détectée.
